# FASCICULE DE BREVET EUROPEEN

(11) **EP 0 955 082 B1**
(45) Date de publication et mention de la délivrance du brevet: **07.03.2007**
(21) Numéro de dépôt: 99401039.5
(22) Date de dépôt: 28.04.1999
(51) Int. Cl.: B01J 2/20, B01J 2/10

(54) **Procédé et installation de fabrication de granulés à partir de matière(s) première(s) en poudre et les produits granulés obtenus**
Verfahren und Anlage zur Herstellung von Granulaten aus pulverigem Rohmaterial und Granulate daraus
Process and installation for making granules from powdery starting materials and products therefrom

(30) Priorité: 30.04.1998 FR 9805697
(43) Date de publication de la demande: 10.11.1999
(73) Titulaire: Procédés Roland Pigeon, 75015 Paris (FR)
(72) Inventeur: Doubre, Bernard, 35290 Saint-Onen La Chapelle (FR); Menard, Paul, 26130 Saint-Paul Les 3 Chateaux (FR); Fatovich, Mirko, 75005 Paris (FR)
(74) Mandataire: Phélip, Bruno

(56) Documents cités:
- EP-A- 0 759 323
- EP-A- 0 786 288
- WO-A-91/06365
- DE-A- 2 162 353
- FR-A- 2 620 599
- GB-A- 2 047 066
- US-A- 3 657 400
- JOHN PAYNE, WOLTER RATTINK, TED SMITH AND TOM WINOWISKI: "The Pelleting Handbook" 1994 , BORREGAARD LIGNOTECH , SARPSBORG, NORWAY XP002089808 * page 9, alinéa 3 *

## Description

La présente invention concerne un procédé et une installation permettant la fabrication de granulés à partir de matière(s) en poudre, en particulier mais non exclusivement pour l'obtention de compléments minéraux pour le sol ou l'alimentation animale; elle concerne également les produits granulés obtenus par la mise en oeuvre du procédé.

Dans le domaine de la fabrication de compléments minéraux pour l'alimentation animale, les matières premières se présentent sous la forme de poudres qui, lorsqu'elles sont utilisées en l'état, mélangées à la ration alimentaire, subissent souvent des pertes importantes et provoquent parfois des problèmes d'obstruction nasale des animaux.
Lorsque ces éléments minéraux sont utilisés à titre de compléments pour le sol, les matières volatiles de base se dispersent sous l'effet du vent pendant ou après l'épandage et les pertes occasionnées peuvent là encore se révéler importantes.

Pour pallier ces inconvénients, on a déjà proposé de modifier la présentation finale du produit en soumettant la poudre ou le mélange de poudres à une opération de granulation ou d'agglomération permettant d'augmenter la taille des particules constitutives.

Par exemple, les documents FR-A-2 620 599 et EP-A-0 759 323 décrivent tous deux un procédé et une installation pour la fabrication de granulés, à partir de matière(s) première(s) en poudre, par la mise en oeuvre d'un plateau rotatif circulaire.
En pratique, la poudre est répandue sur le plateau de sorte à former une couche sur laquelle est projeté un liant liquide pour l'obtention d'agglomérats sensiblement sphériques.
Cependant, ce type de procédé et d'installation, utilisant un plateau rotatif, n'est pas entièrement satisfaisant en ce que les granulés ainsi obtenus ne sont pas d'une granulométrie suffisamment régulière, alors qu'une telle régularité peut se révéler importante, par exemple lorsque le produit final est destiné à être réparti sur le sol aux moyens de matériels mécaniques d'épandage. On peut bien entendu compenser ce problème technique en effectuant un tri pour ne conserver que les granulés ayant une taille acceptable, tel que décrit dans le document EP-A-0 759 323, mais le rendement général de l'installation de fabrication peut alors s'en trouver sensiblement affecté, en particulier lorsque le taux de recyclage est important.

D'autre part, le document JOHN PAYNE et al, « The Pelleting Handbook », 1994, BORREGAARD LIGNOTECH, SARPSBORG, NORWAY XP002089808 présente quant à lui une installation adaptée pour la fabrication de granulés, du genre formeuse, qui consiste au passage forcé de la matière première en poudre dans une filière.
L'installation correspondante ne permet pas, en tant que telle, l'obtention de granulés sphériques qui seraient réguliers en granulométrie, en vue notamment de l'application abordée ci-dessus.
Certaines techniques encore imposent aux matières premières des contraintes importantes qui peuvent nuire à leurs propriétés physico-chimiques intrinsèques.

Le but de la présente invention est d'obtenir, à partir de matières premières en poudre, des granulés de taille relativement régulière et contrôlée ayant une forme arrondie ou qui se rapproche d'une sphère, ceci par une technologie assez simple à mettre en oeuvre et peu contraignante pour les matières premières dont l'activité est recherchée.

Le procédé de fabrication de granulés conforme à la présente invention consiste : - à mélanger la ou les matières en poudre avec un liant sous forme liquide, cette opération de mélange étant réalisée en pulvérisant ledit liant sur un flux vertical descendant de ladite ou desdites matières en poudre, ceci sous l'action de lames rotatives pour obtenir, en sortie, des agglomérats de mélange liant/poudre, - à soumettre ledit mélange liant/poudre à l'action d'un dispositif de mise en forme pour le conformer en cordon cylindrique de diamètre défini, - à fabriquer des granulés en sectionnant le cordon cylindrique selon des tronçons de longueur voisine de leur diamètre, - à faire rouler les granulés obtenus sur eux-mêmes dans un tambour, pour leur conférer une forme générale arrondie ou sensiblement arrondie, puis - à sécher lesdits granulés.

Selon une autre caractéristique de l'invention, l'opération par laquelle on fait rouler, dans un tambour, les granulés sur eux-mêmes pour leur conférer une forme générale sensiblement sphérique s'accompagne d'une pulvérisation de liant permettant la fixation sur lesdits granulés des fines particules en présence.

Après l'opération de séchage des granulés, le procédé conforme à la présente invention prévoit de réaliser une opération complémentaire de tamisage pour sélectionner les particules dont la taille est comprise entre une première valeur basse et une seconde valeur haute déterminées. Les petits et les gros granulés éliminés par cette sélection sur tamis sont recyclés dans le processus de fabrication ; avant ce recyclage, les grosses particules subissent une opération d'émiettage.

Dans le procédé de granulation conforme à la présente invention, la présence du liant permet de limiter les conditions de pression et de température requises pour obtenir une mise en forme convenable du cordon cylindrique; cette opération de mise en forme s'en trouve facilitée et le risque d'affecter les caractéristiques physico-chimiques des matières premières actives est donc diminué. La succession d'étapes précitées permet aussi de contrôler efficacement la forme et la taille des granulés obtenus. Ainsi, en fonction des caractéristiques requises pour le produit final, cela peut permettre de limiter le taux de recyclage de la fraction de produit non conforme ; cela peut aussi permettre de fournir à la clientèle utilisatrice un produit correspondant mieux à ses attentes.

L'installation pour la mise en oeuvre du procédé conforme à la présente invention comprend :
- des moyens de stockage de la ou des matières en poudre et du liant liquide, associés à des moyens de mélange et de dosage,
- des moyens qui permettent le transfert de ladite ou desdites matières en poudre et du liant vers un mélangeur vertical du type comprenant une chambre verticale de mélange équipée d'un arbre central portant un ou plusieurs jeu(x) de lames rotatives,
- des moyens de transfert des agglomérats de mélange liant/poudre(s) formés dans ledit mélangeur, vers une formeuse du type à galets et filière plate perforée, permettant de mettre ledit mélange liant/poudre(s) en forme de cordons sans fin cylindriques, ladite filière plate étant associée à un dispositif de coupe permettant la fabrication de granulés cylindriques à partir desdits cordons sans fin,
- des moyens en forme de tambour rotatif dans lequel sont disposés les granulés cylindriques sortant de la formeuse, pour les faire rouler sur eux-mêmes afin de les façonner en forme générale de sphère,
- des moyens de séchage des granulés obtenus, et
- des moyens de stockage des granulés avec, éventuellement, des moyens de conditionnement.

Toujours selon l'invention, chaque galet de la formeuse est associé à un dispositif de coupe constitué de deux couteaux : l'un actif en amont de l'axe du galet, et l'autre en aval de cet axe.

Selon une autre particularité, le tambour rotatif de l'installation a une section interne polygonale et son axe est légèrement incliné par rapport à l'horizontale pour assurer la progression interne des granulés depuis l'une de ses extrémités formant l'entrée, vers l'autre extrémité formant la sortie. De préférence, une buse de pulvérisation de liant est disposée dans le volume interne de ce tambour pour assurer la fixation sur les granulés des fines particules en présence.

Le procédé et l'installation conformes à l'invention peuvent être adaptés et mis en oeuvre pour obtenir de manière simple et en continu des granulés utilisables à titre de compléments minéraux pour le sol aptes à être correctement épandus par les appareillages mécaniques classiques.

Ainsi, et selon une forme de réalisation intéressante, ces granulés sont obtenus à partir d'un mélange de carbonate de calcium, de chlorure de sodium et d'oligo-éléments associés à un liant du genre mélasse ou lignosulfonate. En outre, l'installation est conformée pour fabriquer un produit granulé dans lequel les particules ont en grande majorité une forme sensiblement arrondie et une granulométrie comprise entre 2,5 et 4 mm. De préférence, dans le produit granulé obtenu, au moins 90 % en poids des particules ont une granulométrie comprise entre 2,5 et 4 mm, en particulier proche de 3 mm. Ce produit présente un taux de poussières inférieur à 0,5 % en poids ; sa densité est proche de 1,1 kg/litre et les granulés constitutifs ont une dureté supérieure à 3,5 Kgf.

L'invention sera illustrée sans être aucunement limitée par la description ci-après , en référence aux dessins annexés dans lesquels :
- la figure 1 est une vue schématique générale d'une installation de fabrication de granulés conforme à la présente invention ;
- la figure 2 est une vue schématique, en coupe, du mélangeur vertical intégré à l'installation ;
- la figure 3 est une vue schématique, en coupe, illustrant la formeuse du type à galet et filière plate perforée intégrée à l'installation ;
- la figure 4 est une coupe de la filière plate perforée montrant la configuration générale des orifices ;
- la figure 5 est une vue schématique agrandie qui illustre le fonctionnement de la formeuse avec son dispositif de coupe pour la fabrication des granulés ;
- la figure 6 est une vue schématique en coupe transversale du tambour rotatif disposé juste derrière la formeuse et permettant d'imprimer un mouvement de roulement des granulés sur eux-mêmes pour leur conférer une forme générale arrondie.

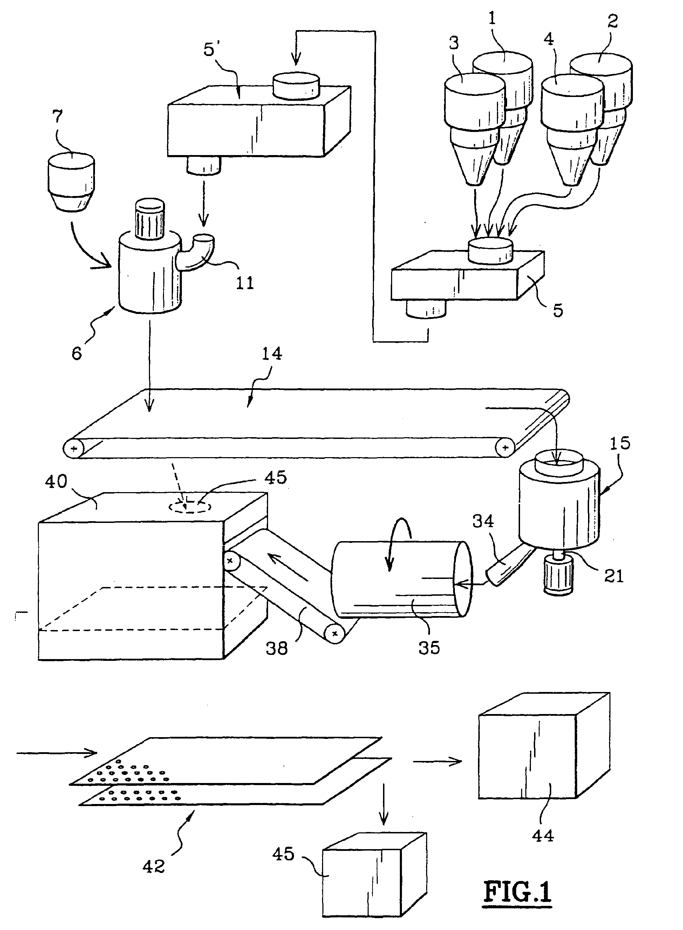

L'installation illustrée à la figure 1 comprend une pluralité de silos 1, 2, 3 et 4 dans lesquels sont stockées les matières en poudre susceptibles d'entrer dans la composition du produit granulé final que l'on désire obtenir. Des moyens de transfert, non représentés, en forme de tapis convoyeur ou autre, assurent l'introduction des matières premières choisies et dosées dans un dispositif mélangeur 5 chargé du brassage des différentes poudres pour obtenir un mélange homogène. On peut utiliser un mélangeur horizontal classique, par exemple à double spires.

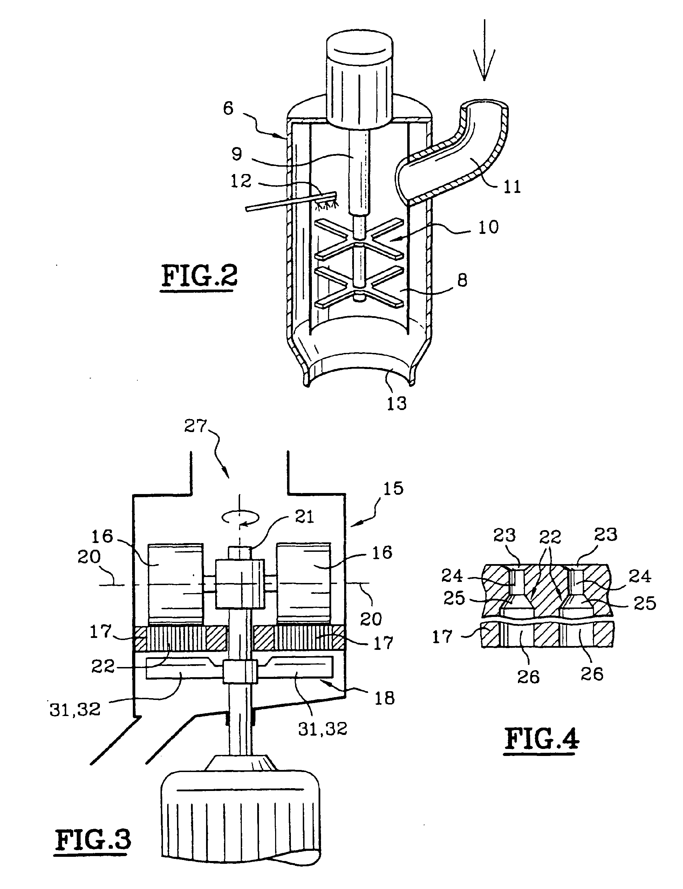

Derrière ce mélangeur 5, on trouve un doseur 5' alimenté par une trémie tampon non représentée, permettant l'alimentation à débit régulier d'un appareil 6 chargé de mélanger la composition en poudre avec un liant liquide de nature adaptée provenant de la cuve de stockage 7. L'appareil de mélange 6 qui est illustré isolément sur la figure 2, correspond à celui décrit dans le document FR-A-2 110 045; on peut en particulier utiliser un modèle Flexomix 335 fabriqué par la Société SCHUGI B.V. 29, CHROOMSTRAAT 8211 AS LELYSTAD - Pays-Bas. Cet appareil consiste en un mélangeur vertical du type comprenant une chambre verticale de mélange 8 dans laquelle est positionné un arbre central motorisé 9 muni d'un ou de plusieurs jeux de lames rotatives 10. Une tubulure d'entrée 11 permet l'introduction de la composition poudreuse dans la chambre verticale 8, à partir de moyens de transfert classiques non représentés et une buse d'injection 12 reliée à la cuve de stockage 7 assure la pulvérisation du liant juste au-dessus des lames rotatives 10. La composition en poudre chute par simple gravité sur le liant pulvérisé. Au cours de la chute, les lames rotatives assurent le mélange de la poudre avec le liant liquide et on obtient dans l'ouverture de sortie 13 des agglomérats de mélange liant/poudre dont la forme et la taille sont assez irrégulières.

Les agglomérats formés sont repris par un tapis convoyeur 14 et ils sont transportés vers un appareil de mise en forme 15 qui a été détaillé sur les figures 3 à 5.

La nature du tapis convoyeur 14 est adaptée pour éviter au maximum le collage des agglomérats sortant du mélangeur 6; la vitesse de transfert sera maximale pour limiter le temps de contact avec la surface de transport.

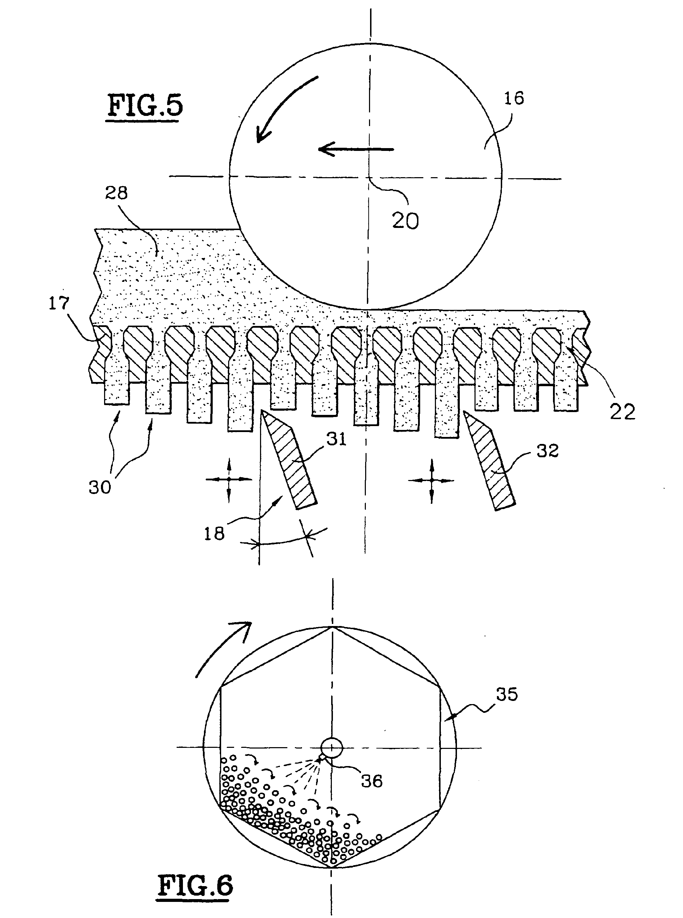

L'appareil de mise en forme 15 consiste en une presse du type à galets 16 et filière plate perforée 17, munie d'un système de coupe 18. Les orifices de la filière plate 17 sont adaptés selon le diamètre de granulés désiré et aussi selon le taux de compression envisagé, et le système de coupe 18 est agencé pour obtenir des granulés cylindriques dont la longueur est voisine de leur diamètre.
Tel qu'on peut le voir sur la figure 3, la formeuse 15 est constituée de galets 16 (au nombre de cinq) montés en rotation libre sur des axes horizontaux 20 et qui roulent sur la filière plate 17, ou juste au-dessus, entraînés par un arbre vertical motorisé 21. La filière plate 17 comprend une série d'orifices 22 détaillés sur la figure 4, constitués, de haut en bas, d'un tronçon tronconique d'entrée 23 suivi d'un tronçon cylindrique de mise en forme 24, lequel se prolonge par un cône de dégagement 25 suivi par un tronçon cylindrique de sortie 26.
La formeuse 15 est alimentée par l'orifice d'entrée 27 et le mélange liant/poudre forme une couche de produit 28 sur la face supérieure de la filière plate 17. Comme on l'a représenté sur la figure 5, le déplacement des galets 16 force le mélange liant/poudre à pénétrer dans les canaux de formage 22 de la filière ; on forme alors des cordons cylindriques sans fin 30 qui sont sectionnés à la longueur désirée par le dispositif de coupe 18 situé juste en dessous de ladite filière plate 17.

Dans le dispositif de mise en forme 15 selon l'invention, le système de coupe 18 est constitué de deux couteaux 31 et 32 associés à chaque galet 16 et entraînés en rotation par l'arbre moteur 21. Le premier couteau 31 assure la coupe des cordons cylindriques 30 en amont de l'axe 20 du galet 16 associé, alors que le second couteau 32 assure une coupe ultérieure desdits cordons 30, en aval dudit axe 20.
Les couteaux 31 et 32 sont réglables individuellement, en positionnement et en orientation. Dans l'installation conforme à la présente invention, ces réglages sont adaptés en fonction des caractéristiques de compression et de diamètre des cordons cylindriques 30, de manière à obtenir en sortie des tronçons de cylindre dont la longueur correspond sensiblement à leur diamètre.

Les granulés cylindriques obtenus sortent de la formeuse 15 via un dispositif de décharge schématisé en 34 sur la figure 1; ils sont ensuite introduits dans un tambour rotatif 35 dont l'axe est légèrement incliné par rapport à l'horizontale et dans lequel ils subissent une opération de brassage et de roulement sur eux-mêmes. Cette opération permet d'arrondir les granulés et de leur conférer une forme se rapprochant de celle d'une sphère, par abrasion et tassement de leurs angles.
Comme on l'a représentée sur la figure 6, la section interne du tambour 35 est polygonale, et en l'occurrence hexagonale, pour forcer les granulés à rouler sur eux-mêmes afin d'optimiser leur mise en forme sphérique. Des moyens moteurs, non représentés, assurent l'entraînement axial du tambour selon une vitesse de l'ordre de 10 à 20 tours par minute.

A l'intérieur du tambour 35, une buse 36 assure la pulvérisation de liant sur les granulés en cours de brassage. Cette buse 36 peut être connectée à son propre réservoir de liant; elle peut aussi être directement reliée à la cuve de stockage 7.
Cette pulvérisation de liant, optionnelle selon les produits traités, permet le collage sur les granulés des fines particules de mélange liant/poudre générées notamment par l'opération d'abrasion en cours ; elle limite les pertes de matière et permet aussi d'optimiser le façonnage sphérique des granulés.

A la sortie du tambour 35, les granulés sont repris par un tapis de convoyage 38 qui les entraîne vers un dispositif de séchage 40 du type à lit fluidisé. Cet appareil permet d'éliminer la majeure partie de la phase aqueuse entrant dans la composition du liant liquide.

Après séchage, les granulés subissent une opération de calibrage sur un tamiseur 42 à deux toiles de tamisage. Les particules de dimensions correctes, comprises entre une valeur haute et une valeur basse déterminées sont évacuées vers une enceinte de stockage 44 ou vers un poste de conditionnement 45; les particules dont la taille est trop importante subissent une opération d'émiettage et elles sont ensuite recyclées avec celles dont la taille est trop petite, par exemple au niveau du mélangeur 5.

Les différents appareils et moyens de transfert qui viennent d'être décrits sont adaptés pour permettre un fonctionnement de l'installation en continu. Ainsi, le doseur 5' chargé de régler le débit d'alimentation de l'appareil mélangeur 6 est approvisionné par une trémie tampon, elle-même alimentée par le mélangeur 5 qui fonctionne en discontinu ; dans le mélangeur vertical 6 et dans le dispositif de formage 15 le produit traité se déplace par gravité ; le tambour rotatif 35 est légèrement incliné pour assurer la progression des granulés de l'entrée vers la sortie ; le sécheur sur lit fluidisé 40 impose un mouvement d'avance du produit par le flux d'air chaud et le dispositif de tamisage est lui aussi légèrement incliné pour orienter les granulés triés vers l'enceinte de stockage 44 ou en direction du poste de conditionnement 45.

L'installation de granulation qui vient d'être décrite peut être utilisée pour tout type de mélange liant/poudre(s) lorsque l'on désire contrôler la taille et la forme des granulés. Dans tous les cas, les caractéristiques des appareils utilisés ainsi que leur fonctionnement seront adaptés au produit que l'on désire obtenir.

En particulier, une installation de ce genre peut être utilisée pour la fabrication de compléments minéraux pour le sol qui, selon les recommandations des constructeurs de machines d'épandage, doivent se présenter sous la forme de granulés durs et denses dont au moins 80 % ont une granulométrie comprise entre 2,5 et 4 mm. Dans ce cas et selon une forme de réalisation intéressante sur le plan des apports au sol, ces compléments minéraux peuvent être constitués d'un mélange de carbonate de calcium, de chlorure de sodium et d'oligo-éléments associés à un composant de liaison approprié, genre mélasse ou lignosulfonate.

A titre illustratif et selon un exemple de réalisation particulièrement intéressant, la composition poudreuse de base peut être constituée de :
- 85 % de calcaire d'extraction courante, de granulométrie comprise entre 100 et 400 micromètres, comprenant 80 % environ de carbonate de calcium et 20 % environ de matières diverses associées ;
- 15 % de chlorure de sodium ayant une granulométrie comprise entre 100 et 400 micromètres, provenant des mines de sel gemme ou d'exploitations marines ; et
- des oligo-éléments, à l'état de traces.
   Après homogénéisation dans le mélangeur à double spires 5, la composition poudreuse atteint le mélangeur vertical 6 du type Flexomix 335 où elle se mélange avec le liant liquide (mélasse ou lignosulfonate dilué à 50 % dans l'eau) sous l'effet du mouvement des lames rotatives 10 entraînées à une vitesse de l'ordre de 2000 tours/mn. Le liant liquide est pulvérisé dans la chambre verticale 8 de façon à être présent selon un pourcentage de l'ordre de 5 à 6 % dans les agglomérats de mélange liant/poudre obtenus.
   Ces agglomérats tombent sur le tapis convoyeur 14 et ils sont transportés à grande vitesse (de l'ordre de 4 à 5 m/s) vers le dispositif de mise en forme 15 configuré de façon à permettre l'obtention de granulés cylindriques dont le diamètre et la longueur sont voisins de 3 mm et mis en oeuvre pour limiter la pression soumise au mélange liant/poudre de façon à ce que la température dudit mélange au cours de la mise en forme n'atteigne pas une valeur critique susceptible d'entraîner des altérations de ses caractéristiques physico-chimiques. En particulier, pour la composition concernée, on veillera à ce que le mélange liant/poudre n'atteigne pas une température de 80°C à coeur.
   Pour obtenir ce résultat, la filière plate 17 de la formeuse 15 a une épaisseur de 50 mm. Ses orifices 22 comportent un cône d'entrée 23 dont le diamètre d'entrée est de 5 mm, dont le diamètre de sortie est de 3 mm et qui s'étend sur une hauteur de 1,5 mm. Ce cône d'entrée est suivi d'un tronçon cylindrique 24 de 3 mm de diamètre s'étendant sur 4,5 mm de long. Le cône de dégagement 25 s'étend sur 15 mm et le tronçon cylindrique de sortie 26, de 5 mm de diamètre, s'étend sur une longueur de 30,5 mm environ.
   La pression appliquée sur le produit est de l'ordre de 50 kg par cm² et le taux de compression est voisin de 1,5.

Le dispositif de coupe 18 est adapté pour sectionner les cordons cylindriques obtenus selon des tronçons de 3 mm de long ; la marge de longueur de coupe est d'environ + 30 % et - 20 % pour obtenir des granulés ayant une longueur comprise entre 2,5 et 4 mm.

Après la mise en forme, les granulés obtenus sont introduits dans le tambour 35 entraîné à une vitesse de l'ordre de 10 à 20 tours/minute. Le temps de séjour des granulés y est de l'ordre de 5 mn et le taux de liant pulvérisé, type mélasse ou lignosulfonate, est de l'ordre de 0,5 à 1 % en poids. On obtient des grains de forme générale arrondie dont la grande majorité a un diamètre voisin de 3 mm ; les poussières ou les fines particules ne se retrouvent qu'en petite quantité.

Le produit granulé est ensuite transféré dans le sécheur sur lit fluidisé 40 où il séjourne pendant 15 mn environ pour en sortir avec un degré d'humidité voisin de 0,5 à 1 %.
Ce sécheur 40 est adapté pour que la température du produit à coeur ne dépasse pas 65-70°C ; d'autre part, il permet l'évacuation des poussières ou des fines particules recyclées vers le dispositif mélangeur 5.

En amont de cet appareil de séchage, les granulés sont soumis au dispositif de triage 42 comportant un premier tamis adapté pour évacuer les particules dont la granulométrie est supérieure à 4 mm, et un second tamis permettant l'évacuation des particules dont la granulométrie est inférieure à 2,5 mm. Les particules éliminées sont recyclées dans le dispositif mélangeur 5 ; étant donné l'opération préalable de mise en forme, le taux de recyclage correspondant est assez faible, de l'ordre de 10 à 15%.

Dans le produit final obtenu, au moins 90 % en poids des particules ont une granulométrie comprise entre 2,5 et 4 mm. D'autre part, le taux de poussières, c'est-à-dire les particules ayant une taille inférieure à 0,71 mm y est très faible; ce taux, mesuré à partir d'un dispositif de tamisage classique est inférieur à 0,5 %. La densité de ce produit déterminée par un appareil densimètre classique est de l'ordre de 1,1 (1100 kg par m3) ; la dureté des granulés qui le composent, mesurée par un appareil de contrôle de dureté (par exemple un appareil distribué par la Société KAHL FRANCE, 60403 NOYON - FRANCE), est supérieure à 3,5 Kgf.

A noter que le produit faisant l'objet du mode de réalisation qui vient d'être décrit peut aussi être utilisé à titre de complément minéral dans la ration alimentaire des porcs, bovins, lapins ou autres.

## Revendications

1. Procédé de fabrication de granulés à partir de matière(s) première(s) en poudre, en particulier pour la fabrication de compléments minéraux pour le sol ou l'alimentation animale, **caractérisé en ce qu'**il consiste :
- à mélanger la ou les matières premières en poudre avec un liant sous forme liquide, cette opération de mélange étant réalisée en pulvérisant ledit liant sur un flux descendant vertical de ladite ou desdites matières en poudre, ceci sous l'action de lames rotatives pour obtenir, en sortie, des agglomérats de mélange liant/poudre.
- à soumettre ledit mélange liant/poudre à l'action d'un dispositif de mise en forme pour le conformer en cordon cylindrique de diamètre défini,
- à fabriquer des granulés en sectionnant le cordon cylindrique selon des tronçons de longueur voisine de leur diamètre,
- à faire rouler les granulés obtenus sur eux-mêmes dans un tambour, pour leur conférer une forme générale arrondie ou sensiblement arrondie, puis
- à sécher lesdits granulés.

2. Procédé selon la revendication 1, **caractérisé en ce que** l'opération par laquelle on fait rouler, dans un tambour, les granulés cylindriques sur eux-mêmes s'accompagne d'une pulvérisation de liant permettant la fixation sur lesdits granulés des fines particules en présence.

3. Procédé selon l'une quelconque des revendications 1 ou 2, **caractérisé en ce qu'**il consiste, après l'opération de séchage des granulés, à réaliser une opération de tamisage pour sélectionner les granulés dont la taille est comprise entre une première valeur basse déterminée et une seconde valeur haute déterminée, les petits granulés et les gros granulés éliminés par cette opération sur tamis étant recyclés dans le processus de fabrication, lesdites grosses particules subissant une opération d'émiettage avant ledit recyclage.

4. Installation pour la mise en oeuvre du procédé selon l'une quelconque des revendications 1 à 3, **caractérisée en ce qu'**elle comprend :
- des moyens de stockage (1, 2, 3, 4, 7) de la ou des matières en poudre et du liant liquide, associés à des moyens de mélange et de dosage (5, 5').
- des moyens de transfert de ladite ou desdites matières en poudre et du liant vers un mélangeur vertical (6) du type comprenant une chambre verticale de mélange (8) équipée d'un arbre central (9) portant un ou plusieurs jeu(x) de lames rotatives (10), ledit mélangeur vertical (6) permettant l'obtention d'agglomérats de mélange liant/poudre(s),
- des moyens de transfert des agglomérats de mélange liant/poudre(s) formés dans ledit mélangeur (6) vers une formeuse (15) du type à galets (16) et filière plate perforée (17), permettant de mettre ledit mélange liant/poudre(s) en forme de cordons sans fin cylindriques, ladite filière plate (17) étant associée à un dispositif de coupe (18) permettant la fabrication de granulés cylindriques à partir desdits cordons sans fin,
- un tambour rotatif (35) dans lequel sont disposés les granulés sortant de la formeuse (15) pour les faire rouler sur eux-mêmes,
- des moyens de séchage (40) des granulés obtenus, et
- des moyens de stockage (44) ou de conditionnement (45) desdits granulés.

5. Installation selon la revendication 4, **caractérisée en ce qu'**elle comprend une formeuse (15) du type à galets (16) et filière plate perforée (17) dont chaque galet (16) est associé à un dispositif de coupe (18) constitué de deux couteaux, l'un (31) actif en amont de l'axe (20) dudit galet (16) et l'autre (32) en aval de cet axe (20).

6. Installation selon l'une quelconque des revendications 4 ou 5, **caractérisée en ce qu'**elle comporte un tambour rotatif (35) de section interne polygonale et dont l'axe est légèrement incliné par rapport à l'horizontale pour assurer la progression interne des granulés de l'entrée vers la sortie.

7. Installation selon l'une quelconque des revendications 4 à 6, **caractérisée en ce qu'**elle comporte un tambour rotatif (35) dans le volume intérieur duquel est disposée une buse (36) de pulvérisation de liant.

8. Produit granulé obtenu directement par le procédé selon l'une quelconque des revendications 1 à 3, utilisable à titre de complément minéral pour le sol ou l'alimentation animale, **caractérisé en ce qu'**il se présente sous la forme de granulés arrondis et sensiblement sphériques constitués d'un mélange de matières minérales associées à un liant, possédant un taux de poussières inférieur à 0,5 % en poids, dont la dureté des granulés est supérieure à 3,5 kgf et dont la densité est voisine de 1,1 kg/litre.

9. Produit granulé selon la revendication 8 dont au moins 90 % en poids sont constitués de granulés ayant une granulométrie comprise entre 2,5 et 4 mm, en particulier voisine de 3 mm.

10. Produit granulé selon l'une quelconque des revendications 8 ou 9, **caractérisé en ce qu'**il est constitué d'un mélange de carbonate de calcium, de chlorure de sodium et d'oligo-éléments associés à un liant du genre mélasse ou lignofulsonate.

## Claims

1. A process for making granules from powdery starting material(s), in particular for making mineral complements for the soil or animal feedstock, **characterised in that** it consists :
- in mixing the powdery starting material(s) with a binder in liquid form, this mixing operation being carried out by spraying said binder over a vertical descending flux of said powdery material(s), under the action of rotary blades in order to obtain, at output, agglomerates of binder/powder mixture,
- in subjecting said binder/powder mixture to the action of a shaping device in order to form it into a cylindrical bead of set diameter,
- in making granules by cutting the cylindrical bead into sections of length close to the diameter thereof,
- in rolling the granules obtained over themselves in a drum, in order to confer them general rounded or substantially rounded shape, then
- in drying said granules.

2. A process according to claim 1, **characterised in that** the operation through which the cylindrical granules are rolled over themselves, is accompanied by spraying a binder enabling to attach the existing fine particles to said granules.

3. A process according to any of the claims 1 or 2, **characterised in that** it consists, after drying the granules, in conducting a sieving operation for selecting the granules whereof the size ranges between a first determined lower value and a second determined upper value, the smaller granules and the larger granules eliminated by said sieving operation being recycled in the manufacturing process, said larger particles being subjected to a crumbling operation before said recycling.

4. An installation for implementing the process according to any of the claims 1 to 3, **characterised in that** it comprises:
- means (1, 2, 3, 4, 7) for storing the powdery material(s) and liquid binder, associated with mixing and dosing means (5, 5'),
- means for transferring said powdery material(s) and said binder towards a vertical mixer (6) of the type comprising a vertical mixing chamber (8) fitted with a central shaft (9) carrying one or several sets of rotary blades (10), said vertical mixer (6) enabling to obtain agglomerates of binder/powder(s) mixture,
- means for transferring agglomerates of binder/powder(s) mixture formed in said mixer (6) towards a shaper (15) fitted with rollers (16) and with a punched flat die (17), enabling to shaped said binder/powder(s) mixture into endless cylindrical beads, said flat die (17) being associated with a cutting device (18) enabling the manufacture of cylindrical granules from said endless beads,
- a rotary drum (35) wherein the granules coming out of the shaper (15) are arranged in order to be rolled over themselves,
- means (40) for drying the granules obtained, and
- means for storing (44) or packaging (45) said granules.

5. An installation according to claim 4, **characterised in that** it comprises a shaper (15) fitted with rollers (16) and a punched flat die (17) whereof each roller (16) is associated with a cutting device (18) formed of two knives, the one (31) active upstream of the axis (20) of said roller (16) and the other (32) downstream of said axis (20).

6. An installation according to any of the claims 4 or 5, **characterised in that** it comprises a rotary drum (35) of polygonal inner section and whereof the axis is slightly tilted with respect to the horizontal for ensuring the internal progression of the granules from input to output.

7. An installation according to any of the claims 4 to 6, **characterised in that** it includes a rotary drum (35) in the inner volume containing a binder-spraying nozzle (36).

8. A granulated product obtained directly by the process according to any of the claims 1 to 3, usable as a mineral complement for the soil and the animal feedstock, **characterised in that** it is provided in the form of rounded and substantially spherical granules formed of a mixture of mineral materials associated with a binder, possessing a dust ratio smaller than 0.5 % en weight, whereof the hardness of the granules is greater than 3.5 kgf and whereof the density is close to 1.1 kg/litre.

9. A granulated product according to claim 8, whereof at least 90 % in weight are formed of granules having a grain size ranging between 2.5 and 4 mm, in particular close to 3 mm.

10. A granulated product according to any of the claims 8 or 9, **characterised in that** it is formed of a mixture of calcium carbonate, sodium chloride and oligo-elements associated with a binder such as molasses or lignosulfonate.

## Patentansprüche

1. Verfahren zur Herstellung von Granulat aus Pulverrohmaterial, insbesondere zur Herstellung von Mineralzusätzen für Böden oder Tiernahrung,
**dadurch gekennzeichnet,**
**dass** es darin besteht,
- das Pulvermaterial oder die Pulverrohmaterialien mit einem Bindemittel in flüssiger Form zu vermischen, wobei der Mischvorgang durch Aufsprühen des genannten Bindemittels auf einen sich senkrecht abwärts bewegenden Strom des Pulverrohmaterials oder der Pulverrohmaterialien ausgeführt wird, und dies unter Einwirkung von drehenden Mischblättern, um am Auslauf Agglomerate der Bindemittel-Pulvermischung zu erhalten.
- die genannte Bindemittel-Pulvermischung der Bearbeitung durch eine Formvorrichtung zu unterziehen, um sie zu einem zylindrischen Strang mit festgelegtem Durchmesser zu formen,
- Granulatkörner durch Zerschneiden des zylindrischen Strangs in Abschnitte einer ihrem Durchmesser angenäherten Länge herzustellen,
- die erhaltenen Granulatkörner in einer Trommel auf sich selbst rollen zu lassen, um ihnen eine allgemein abgerundete oder im Wesentlichen abgerundete Form zu verleihen, und dann
- die genannten Granulatkörner zu trocknen.

2. Verfahren nach Anspruch 1,
**dadurch gekennzeichnet,**
**dass** bei dem Arbeitsgang, bei dem man die zylindrischen Granulatkörner in einer Trommel auf sich selbst rollen lässt, gleichzeitig Bindemittel gesprüht wird, um auf den genannten Granulatkörnern die Fixierung anwesender feiner Partikel zu gestatten.

3. Verfahren nach einem der Ansprüche 1 oder 2,
**dadurch gekennzeichnet,**
**dass** es darin besteht, nach dem Trocknungsgang der Granulatkörner einen Siebgang auszuführen, um die Granulatkörner auszuwählen, deren Größe zwischen einem ersten festgelegten unteren Wert und einem zweiten festgelegten oberen Wert liegt, wobei die bei diesem Arbeitsgang auf dem Sieb aussortierten kleinen und großen Granulatkörner wieder in den Herstellungsprozess zurückgeführt werden und die genannten großen Partikel vor der genannten Rückführung einem Zerkleinerungsvorgang unterzogen werden.

4. Anlage zur Durchführung des Verfahrens nach einem der Ansprüche 1 bis 3,
**dadurch gekennzeichnet,**
**dass** sie folgendes aufweist:
- Mittel zur Lagerung (1, 2, 3, 4, 7) des Pulvermaterials oder der Pulvermaterialien und des flüssigen Bindemittels, die mit Misch- und Dosiermitteln (5, 5') verbunden sind,
- Mittel für den Transport des oder der genannten Pulvermaterialien und des Bindemittels zu einem Vertikalmischer (6) des Typs, der eine senkrechte Mischkammer (8) mit einer zentralen Welle (9) besitzt, an der ein oder mehrere Sätze drehender Mischblätter (10) angebracht sind, wobei der Vertikalmischer (6) es gestattet, Agglomerate der Bindemittel-Pulvermischung zu erhalten,
- Mittel zum Transport der im genannten Mischer (6) erhaltenen Agglomerate der Bindemittel-Pulvermischung zu einer Formmaschine (15) mit Presswalzen (16) und einer gelochten Düsenplatte (17), die es gestattet, die genannte Bindemittel-Pulvermischung zu endlosen zylindrischen Strängen zu formen, wobei die genannte Düsenplatte (17) mit einer Schneidvorrichtung (18) verbunden ist, welche die Herstellung von zylindrischen Granulatkörnern aus den genannten endlosen zylindrischen Strängen gestattet,
- einer Drehtrommel (35) in die die aus der Formmaschine (15) austretenden Granulatkörner verbracht werden, um diese auf sich selbst rollen zu lassen,
- Mittel zum Trocknen (40) der erhaltenen Granulatkörner und
- Mittel zur Lagerung (44) oder zum Abfüllen (45) der genannten Granulatkörner.

5. Anlage nach Anspruch 4,
**dadurch gekennzeichnet,**
**dass** sie eine Formmaschine (15) mit Presswalzen (16) und einer gelochten Düsenplatte (17) aufweist, von denen jede Presswalze (16) mit einer Schneidvorrichtung (18) verbunden ist, die aus zwei Messern besteht, von denen ein Messer (31) vor der Achse (20) der genannten Presswalze (16) arbeitet und ein anderes (32) hinter dieser Achse (20).

6. Anlage nach einem der Ansprüche 4 oder 5,
**dadurch gekennzeichnet,**
**dass** sie eine Drehtrommel (35) mit polygonalem Innenquerschnitt aufweist, und deren Achse leicht zur Waagerechten geneigt ist, um die innere Fortbewegung der Granulatkörner vom Eingang zum Ausgang zu gewähren.

7. Anlage nach einem der Ansprüche 4 bis 6,
**dadurch gekennzeichnet,**
**dass** sie eine Drehtrommel (35) aufweist, in deren Innenraum eine Bindemittelsprühdüse (36) angeordnet ist.

8. Unmittelbar durch das Verfahren nach einem der Ansprüche 1 bis 3 gewonnenes Granulaterzeugnis, das als Mineralzusatz für Böden oder Tiernahrung verwendet werden kann,
**dadurch gekennzeichnet,**
**dass** es in Form von abgerundeten und im Wesentlichen kugeligen Granulatkörnern vorliegt, die aus einer Mischung von Mineralstoffen und einem Bindemittel bestehen, die einen Staubanteil von weniger als 0,5 Gewichtsprozenten aufweisen, wobei die Härte der Granulatkörner über 3,5 kgf und ihre Dichte bei etwa 1,1 kg/Liter liegt.

9. Granulaterzeugnis nach Anspruch 8, von dem mindestens 90 Gewichtsprozente aus Granulatkörnern bestehen, die eine Korngrößenverteilung zwischen 2,5 und 4 mm und insbesondere bei etwa 3 mm haben.

10. Granulaterzeugnis nach einem der Ansprüche 8 oder 9,
**dadurch gekennzeichnet,**
**dass** es aus einer Mischung von Kalziumkarbonat, Natriumchlorid und Spurenelementen in Verbindung mit einem Bindemittel der Art Melasse oder Lignosulfonat besteht.
